# EUROPEAN PATENT APPLICATION

(11) **EP 4 785 771 A1**
(43) Date of publication of application: **05.08.2026**
(21) Application number: 25216283.9
(22) Date of filing: 17.11.2025
(51) Int. Cl.: A01D 34/00, A01D 34/84, G05D 1/43

(54) **GRASS MOWING VEHICLE**

(30) Priority: 31.01.2025 US 202519042819
(71) Applicant: Deere & Company, Moline, IL 61265 (US)
(72) Inventor: Carnahan, Bryce, Mannheim (DE)
(74) Representative: Reichert, Christian

(57) **Abstract**

A grass mowing vehicle (100) is disclosed. The grass mowing vehicle (100) comprising: a plurality of ground engaging traction elements (108, 110) moveable to carry the grass mowing vehicle (100) across a worksite (700); one or more cutting units (104, 106) configured to cut grass at the worksite (700); and a control system (205) configured to: adjust (820) an off path error tolerance corresponding to the grass mowing vehicle (100) to generate a path plan (360) for the grass mowing vehicle (100) at the worksite (700); and automatically control (824) the grass mowing vehicle (100) based, at least, on the adjusted off path error tolerance. Furthermore, method performed by such a grass mowing vehicle (100) is disclosed.

## Description

### FIELD OF THE DESCRIPTION

The present description relates to grass mowing vehicles, and more specifically to path planning for grass mowing vehicles.

### BACKGROUND

There are a wide variety of different types of grass mowing vehicles used to mow golf courses, parks, athletic fields, and lawns. Grass mowing vehicles can include functionality for automatically controlling travel path and other operating settings of the grass mowing vehicles during a mowing operation. A path planner can be used to generate a path plan for a grass mowing vehicle that can include a route, including swaths (cutting passes) connected by turns, as well as other prescriptive operating settings along the route.

The discussion above is merely provided for general background information and is not intended to be used as an aid in determining the scope of the claimed subject matter.

### SUMMARY

A grass mowing vehicle includes a plurality of ground engaging traction elements moveable to carry the grass mowing vehicle across a worksite and one or more cutting units configured to cut grass at the worksite. The grass mowing vehicle further includes a control system configured to adjust an off path error tolerance corresponding to the grass mowing vehicle and to automatically control the grass mowing vehicle based, at least, on the adjusted off path error tolerance.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a partial pictorial, partial schematic illustration showing an example grass mowing machine.
FIG. 2 is a block diagram of one example grass mowing system architecture.
FIG. 3 is a block diagram showing some examples of components of the grass mowing system architecture, including path planning system, in more detail.
FIG. 4 is a pictorial illustration showing one example vehicle model.
FIG. 5 is a pictorial illustration showing one example off path error tolerance relationship.
FIGS. 6A and 6B are pictorial illustrations showing example path planning operations.
FIG. 7 is a flowchart showing example operation of the grass mowing system architecture in performing dynamic off path error tolerance adjustment, path planning and grass mowing vehicle control.
FIG. 8 is a flowchart showing example operation of the grass mowing system architecture in performing in-situ dynamic off path error tolerance adjustment and grass mowing vehicle control.
FIG. 9 is a block diagram showing one example of items of a grass mowing system architecture in communication with a remote server architecture.
FIGS. 10, 11, and 12 show examples of mobile devices that can be used in a grass mowing system architecture.
FIG. 13 is a block diagram showing one example of a computing environment that can be used in a grass mowing system architecture.

### DETAILED DESCRIPTION

In grass mowing operations, particularly commercial grass mowing operations, such as mowing golf courses, parks, and athletic fields, a high quality of cut is desired. In such applications, it may be desired, or even required, to ensure that grass is at uniform height or cut in certain patterns. Current grass mowing vehicles include automation functionality for automatically controlling travel path and other operating settings of the grass mowing vehicle during the mowing operation. A path planner can be used to generate a path plan that includes a route, including swaths (cutting passes), as well as other prescriptive operating settings along the route. The path plan can be used in automatically controlling the grass mowing vehicle. This can help to minimize distance travelled, minimize unevenly cut areas, minimize uncut areas, obtain desired cut height, and to help otherwise provide efficient operation.

Such automation relies on localization. There are a variety of different methods of localization for identifying the location of a vehicle in an environment such as, but not limited to, GNSS localization, Simultaneous Localization and Mapping (SLAM), as well as other methods. These methods each have a certain amount of error, which can be represented by an estimated positional accuracy (e.g., plus or minus a certain distance). Further, such automation relies on control systems to automatically control the vehicle. Control systems can also have a certain amount of error in controlling the vehicle, which, in the context of travel control, can be measured in estimated positional accuracy (e.g., plus or minus a certain distance). The cumulative error (e.g., the cumulative error of localization and the control system) can be referred to as off path error and is generally represented by a distance value (e.g. 0.5 meters (m)) which indicates the amount that the vehicle's position can be reasonably expected to be off from the desired position. The off path error can apply to multiple dimensions, that is to say, the vehicle may be off path, by the error, laterally (e.g., side-to-side, to the side, left or right), longitudinally (e.g., front-to-back, ahead or behind, forward or backward, etc.), and/or vertically (e.g., top-to-bottom, above or below, high or low). Off path error can be affected by operating settings (e.g., travel velocity (e.g., travel speed) of the vehicle.

To account for off path error in automated travel control, current path planning system use a preset fixed off path error value or off path error tolerance (e.g., default, set by an operator or user, provided by manufacturer, off path error tolerance at highest available speed of the vehicle, other sources) when generating a path plan. A worksite (e.g., golf course, park, athletic field, lawn, etc.) may have mowing areas and non-mowing areas. Non-mowing areas can include grass areas that are not to be mowed or are to be mowed at a different cut height than a current mowing area or during a separate operation. For instance, in the case of golf courses, a non-mowing area may be, for a particular operation, the rough when the operation is to cut the fairway as the rough is to be cut at a different height than the fairway and/or during a different operation than the fairway. Non-mowing areas can also include obstacles that are to be avoided during the course of a mowing operation. For example, such obstacles can include trees and other plants, rocks, fences, water features, sand traps (or bunkers), as well as various other obstacles. The locations and boundaries of mowing areas and non-mowing areas can be known by a path planning system (e.g., from maps, user/operator inputs, other sources). When generating a path plan, a path planning system will account for the locations and boundaries of the mowing area, the locations and boundaries of non-mowing areas, the dimensions of the vehicle, and the off path error tolerance, in order to provide desired coverage of the area to be mowed and to avoid operation in (or intersection with) non-mowing areas.

However, due to the particulars of the operation (e.g., the preset fixed off path error tolerance, dimensions of the vehicle, locations and boundaries of mowing areas and non-mowing areas), there can be instances in which current path planning systems are unable to generate path plans that provide complete (e.g., at least relative to a threshold completeness) coverage of the mowing areas. For example, there may be areas of the mowing area for which coverage cannot be provided (i.e. a covering cutting path cannot be generated) given the preset fixed off path error tolerance, the dimensions of the machine, the locations and boundaries of the mowing areas, and the locations and boundaries of non-mowing areas. Thus, current path planning systems may generate path plans that leave areas of the mowing area uncovered (uncut) which may require a (or additional) cleanup passes or an operator to manually control the vehicle to cover (cut) those areas. These drawbacks result in user/operator dissatisfaction and less efficient operation.

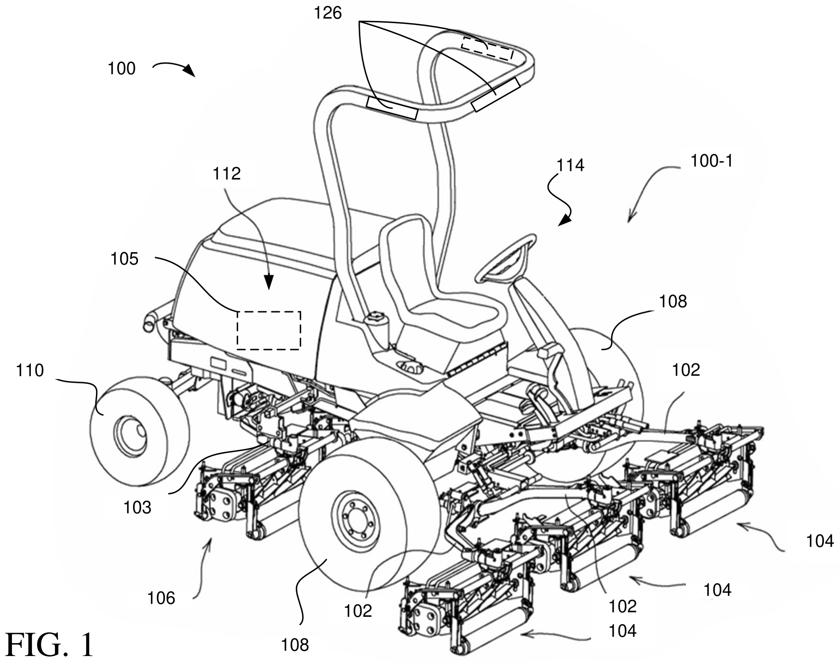

Disclosed herein are systems and methods that provide for dynamically adjusting off path error tolerance of grass mowing vehicle to provide coverage of a mowing area. In one example, the systems and method include a real time or near real time path planner and path planning that receive a path plan and during the course of the operation (e.g., as the vehicle is traveling and/or executing the path plan) dynamically adjust the off path error tolerance of the grass mowing vehicle to comply with the path plan. In such examples, the system may identify areas along the route of the path plan for which a currently used off path error tolerance will cause operation in or intersection with non-mowing areas if the route is followed and dynamically adjust the off path error tolerance, such as by prescribing adjusted operating settings, such as adjusted prescriptive travel velocity (e.g., travel speed and/or direction). In another example, the systems and methods include a path planner and path planning that identifies areas of a mowing area that will not be covered (i.e., for which cutting path (or swath) coverage cannot be generated) and dynamically adjusts the off path error tolerance in order generate a path plan that includes cutting paths (swaths) to cover (cut) those areas more completely, such as by dynamically adjusting off path error tolerance in those areas. In one example, the systems and methods systematically and dynamically adjust off path error tolerance by assigning adjusted prescriptive operating settings, such as adjusted prescriptive travel velocity (e.g., travel speed and/or direction). For example, the systems and methods may assign adjusted prescriptive operating settings to adjust off path error tolerance in areas for which coverage could not be provided with a previously used off path error tolerance. FIG. 1 is partial pictorial, partial schematic illustration of an example grass mowing vehicle 100. In the example shown in FIG. 1, grass mowing vehicle 100 is a fairway mowing vehicle 100-1. Fairway mowing vehicle 100-1 includes a plurality of front cutting units 104 and one or more rear cutting units 106. The orientation (e.g., height, tilt, roll, etc.) of front cutting units 104 and rear cutting units 106 may be controllably set and adjusted by virtue of a moveable support apparatuses, illustratively shown as 102 and 103. Cutting units 104 and 106 are operable to engage and cut grass at worksites. Fairway mowing vehicle 100-1 further includes left and right drive wheels 108 and a steerable left and right rear wheels 110.

Fairway mowing vehicle 100-1 includes a number of controllable subsystems, some of which are shown in FIG. 1. As illustrated, fairway mowing vehicle 100-1 includes a propulsion subsystem, indicated generally by arrow 112, and a steering subsystem, indicated generally by arrow 114. Propulsion subsystem 112 includes a powerplant (e.g., internal combustion engine, batteries, hybrid (combustion engine and batteries), etc.) as well as other drivetrain elements (e.g., gearbox, axles, brakes, actuators (e.g., electric motors, etc.). In one particular example, propulsion subsystem 112 includes an electric motor for each of left and right drive wheels 108 used to drive left and right drive wheels 108. The electric motors are powered by on-board batteries which can be charged by an internal combustion engine or by another source.

Steering subsystem 114 includes one or more actuators (e.g., linear actuators, hydraulic actuators, etc.) and linkages used to change orientation (e.g., turn angle) of steerable left and right rear wheel 110 to change a heading of fairway mowing vehicle 100-1.

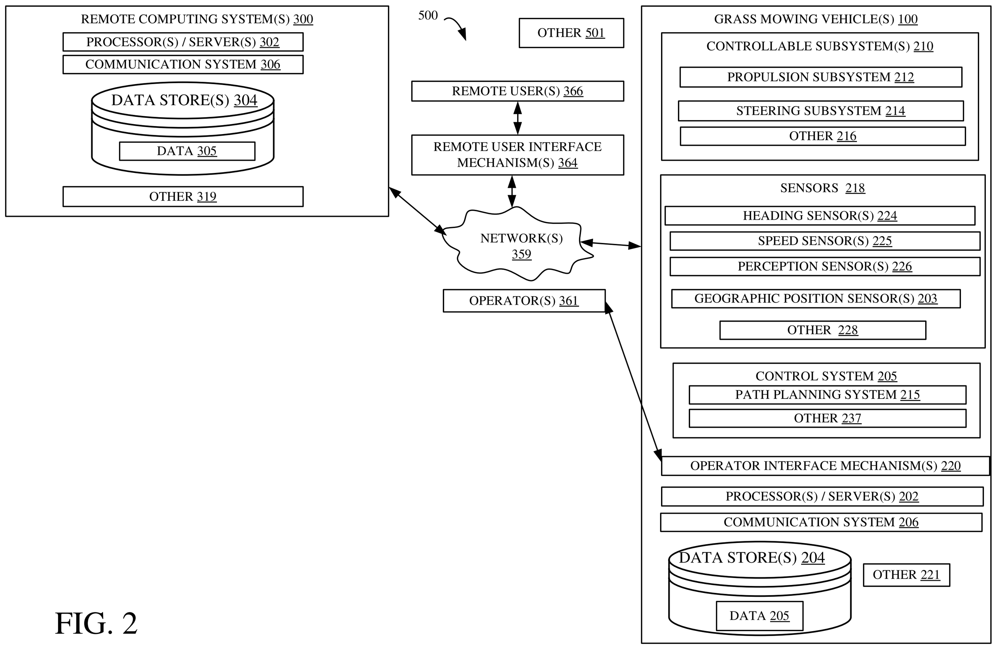

As illustrated in FIG. 1, fairway mowing vehicle 100-1 includes a control system 105 (e.g., controller(s), computing device(s), etc.). Control system 105 is operable to send control signals to control controllable subsystems, including propulsion subsystem 112 and steering subsystem 114, to set and adjust operating settings of fairway mowing vehicle 100-1, such as travel direction (or heading) and travel velocity (e.g., speed). As will be discussed in more detail in FIG. 2, control system 105 can include, or by implemented by, memory storing instructions and one or more processors that execute the instructions. Further, control system 105 can include other items, such as path planning system (e.g., 215), as will be shown in FIG. 2.

Fairway mowing vehicle 100-1 can include a number of different sensors that can provide sensor data (e.g., sensor signals, images, etc.) that can be used by control system 105 in the control of fairway mowing vehicle 100-1. Some examples of such sensors are shown in FIG. 1 (further examples are shown in FIG. 2). As shown in FIG. 1, fairway mowing vehicle 100-1 can include a plurality of perception sensors 126. Perception sensors 126 can include one or more of cameras, LIDAR sensors, RADAR sensors, ultrasonic sensors, as well other types of sensors, such as other types of sensors configured to capture or emit and capture electromagnetic radiation. Perception sensors 126 are configured to detect items and characteristics of the worksite, including, for example, but not by limitation, presence and location of non-mowing areas (e.g., obstacles, etc.). While only some examples are shown in FIG. 1, it will be understood that a grass mowing vehicle 100, such as fairway mowing vehicle 100-1, can include a variety of sensors. Some examples of such sensors (e.g., 218) are shown in FIG. 2.

It will be understood that a fairway mowing vehicle 100-1 is merely one example of a grass mowing vehicle and that that systems and methods described herein are applicable to and can be used with various other forms of grass mowing vehicles such as, but not limited to, other golf mowing vehicles (e.g., triplex mowing vehicles, etc.), yard mowing vehicles (e.g., zero-turn mowing vehicles, riding lawn tractors, etc.), sport turf mowing vehicles, as well as various other grass mowing vehicles.

FIG. 2 is a block diagram showing one example grass mowing system architecture 500 (hereinafter also referred to as grass mowing system 500 or as system 500). Grass mowing system 500 includes one or more grass mowing vehicles 100 (e.g., one or more fairway mowing vehicles 100-1, etc.). System 500 also includes one or more remote computing systems 300, one or more networks 359, one or more remote user interface mechanisms 364, and can include a variety of other items 501 as well.

Each grass mowing vehicle 100, itself, illustratively includes one or more processors or servers 202, one or more data stores 204, control system 205 communication system 206, one or more controllable subsystems 210, one or more sensors 218, one or more operator interface mechanisms 220, and can include various other items and functionality 221. A grass mowing vehicle 100 can also be referred to as a mower 100, for instance, a fairway mowing vehicle 100-1 can also be referred to as a fairway mower 100-1.

Remote computing systems 300, as illustrated, include one or more processors or servers 302, one or more data stores 304, communication system 306, and can include various other items and functionality 319.

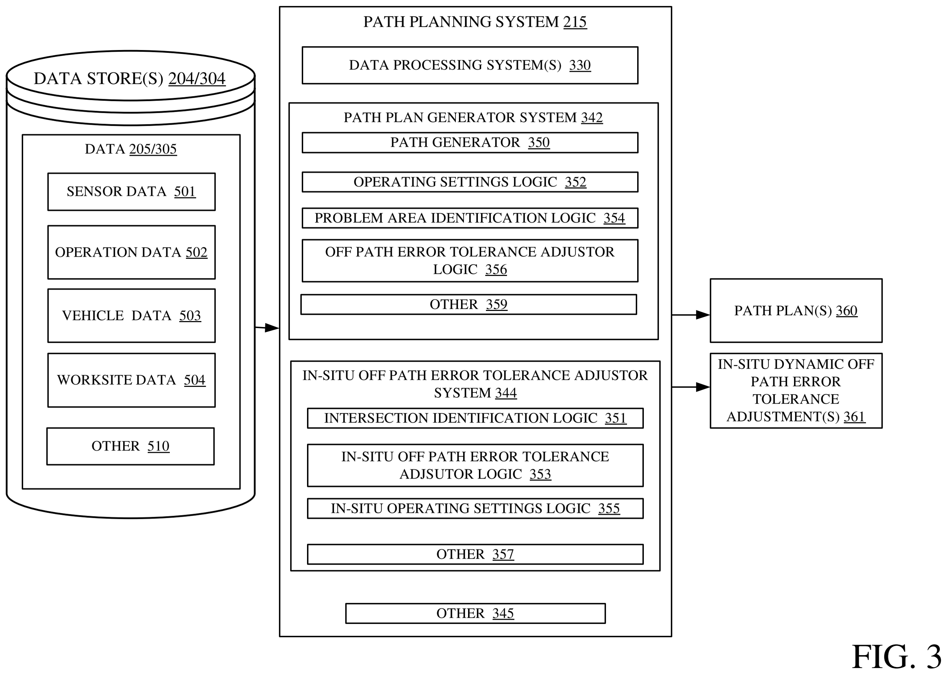

Data stores 204 and data stores 304 each store a variety of data (generally indicated as data 205 and data 305 respectively), some of which will be described in more detail herein. For example, data 205 or data 305, or a combination thereof, can include, among other things, sensor data, operation data, vehicle data, worksite data, as well as various other data. Some examples of the various data will be described in more detail in FIG. 3. Additionally, data 205 can include computer executable instructions that are executable by one or more processors or servers 202 to implement other items or functionalities of system 500, including other items or functionalities of grass mowing vehicles 100. Additionally, data 305 can include computer executable instructions that are executable by one or more processors or servers 302 to implement other items or functionalities of system 500, including other items of remote computing systems 300. It will be understood that data stores 204 and data stores 304 can include different forms of data stores, for instance both volatile data stores (e.g., Random Access Memory (RAM)) and non-volatile data stores (e.g., Read Only Memory (ROM), hard drives, solid state drives, etc.).

Sensors 218 can include one or more heading sensor systems 224, one or more speed sensors 225, one or more perception sensors 226, one or more geographic position sensors 203, and can include various other sensors 228 as well. The sensor data (e.g., signals, images, etc.) generated by sensors 218 can be communicated to remote computing systems 300, to other grass mowing vehicles 100, and to other items of a grass mowing vehicle 100.

Geographic position sensors 203 illustratively sense or detect the geographic position or location of a grass mowing vehicle 100. Geographic position sensors 203 can include, but are not limited to, a global navigation satellite system (GNSS) receiver that receives signals from a GNSS satellite transmitter. Geographic position sensors 203 can also include a real-time kinematic (RTK) component that is configured to enhance the precision of position data derived from the GNSS signal. Geographic position sensors 203 can include one or more RADAR sensors, LIDAR sensor, ultrasonic sensors, or cameras that generate sensor data for use in Simultaneous Localization and Mapping (SLAM) to identify the position or location of a grass mowing vehicle 100. Geographic position sensors 203 can include a dead reckoning system, a cellular triangulation system, or any of a variety of other geographic position sensors.

Heading sensors 224 detect a heading characteristic (e.g., travel direction) of a grass mowing vehicle 100. This can include sensors that sense the movement or orientation (e.g., turn angle) of ground-engaging traction elements (e.g., wheels 110) or movement of components coupled to the ground engaging traction elements (e.g., steering shaft) or other elements, or can utilize signals received from other sources, such as geographic position sensors 203. Thus, while heading sensors 224 as described herein are shown as separate from geographic position sensors 203, in some examples, vehicle heading is derived from signals received from geographic position sensors 203 and subsequent processing. In other examples, heading sensors 225 are separate sensors and do not utilize signals received from other sources.

Speed sensors 225 detect a speed characteristic (e.g., travel speed, acceleration, deceleration, etc.), or both, of a grass mowing vehicle 100. This can include sensors that sense the movement (e.g., rotation) of ground-engaging elements (e.g., wheels 108 or wheels 110) or movement of components coupled to the ground engaging elements (e.g., axles), or other elements. This can include sensors, such as LIDAR or RADAR. In some examples, signals received from other sources, such as geographic position sensors 203, can be utilized to detect speed characteristics. Thus, while speed sensors 225 as described herein are shown as separate from geographic position sensors 203, in some examples, vehicle speed is derived from signals received from geographic position sensors 203 and subsequent processing. In other examples, speed sensors 225 are separate sensors and do not utilize signals received from other sources.

Perception sensors 226 detect items at and characteristics of the worksite at which a grass mowing vehicle 100 operates. This can include detecting presence and location of non-mowing areas. Perception sensors can include cameras, LIDAR sensors, RADAR sensors, ultrasonic sensors, as well as other types of sensors, such as other types of sensors configured to capture or emit and capture electromagnetic radiation. One example of perception sensors 226 are perception sensors 126 shown in FIG. 1.

Sensors 218 can also include various other types of sensors 228.

Control system 205 can be or can include one or more controllers or one or more computing devices, or both, and can further include, or be implemented by, memory (e.g., 204) storing instructions (e.g., of data 205) and one or more processors 202 that execute the instructions. Control system 205 can also include path planning system 215 and various other items 237. Control system 205 is operable to control various items of a grass mowing vehicle 100, including, but not limited to, controllable subsystems 210. One example of control system 205 is control system 105 discussed in FIG. 1. Controllable subsystems 210 can include propulsion subsystem 212, steering subsystem 214, and can include various other controllable subsystems 216 as well. Control system 205 can generate control signals to control one or more components of a grass mowing vehicle 100 or components of system 500, or both. For example, but not by limitation, control system 205 can control controllable subsystems 210, communication system 206, as well as operator interface mechanisms 220. In some examples, control system 205 can generate control signals to control items of system 500, such as remote user interface mechanisms 364. Propulsion subsystem 212 includes a powerplant (e.g., internal combustion engine, batteries, hybrid (combustion engine and batteries), etc.) as well as other drivetrain elements (e.g., gearbox, axles, brakes, actuators (e.g., electric motors, etc.). Propulsion subsystem 212 is controllable to control a travel velocity (e.g., speed) of a grass mowing vehicle 100 by controllably driving movement of ground-engaging traction elements (e.g., wheels 108). One example of propulsion subsystem 212 is propulsion subsystem 112 shown in FIG. 1.

Steering subsystem 214 includes one or more controllable actuators (e.g., linear actuators, hydraulic actuators, etc.) and linkages that are controllably actuatable to control the orientation (e.g., turn angle) of ground-engaging traction elements (e.g., wheels 110) and thus, heading of a grass mowing vehicle 100. One example of steering subsystem 214 is steering subsystem 114 shown in FIG. 1.

FIG. 2 also shows that control system 205 can include path planning system 215. Path planning system 215 is operable to generate a path plan that includes a route, including cutting paths and non-cutting paths, for a grass mowing vehicle 100 as well as prescriptive operating settings along the planned route. Additionally, path planning system 215 is operable to dynamically adjust an off path error tolerance corresponding to a grass mowing vehicle 100. In one example, path planning system 215 is operable to dynamically adjust an off path error tolerance corresponding to a grass mowing vehicle 100 in the process of generating a path plan, that is, at the planning stage or ahead of a given operation at the worksite. In another example, path planning system 215 is operable to adjust an off path error tolerance corresponding to a grass mowing vehicle 100 as the grass mowing vehicle is operating at a worksite, such as when executing a path plan. Path planning system 215 will be discussed in more detail in FIG. 3.

Communication system 206 is used to communicate between components of a grass mowing vehicle 100 or with other items of system 500, such as remote computing systems 300, other grass mowing vehicles 100, user interface mechanisms 364, or a combination thereof. Communication system 306 is used to communicate between components of a remote computing system 300 or with other items of system 500, such as grass mowing vehicles 100, other remote computing systems 300, user interface mechanisms 364, or a combination thereof.

Communication systems 206 and 306 can each include one or more of wired communication circuitry and wireless communication circuitry, as well as wired and wireless communication components. In some examples, communication systems 206 and 306 can each be a system for communicating over the Internet, a cellular communication system, a system for communicating over a wide area network or a local area network, a system for communicating over a controller area network (CAN), such as a CAN bus, a system for communicating over a controller area network flexible data-rate (CAN-FD), such as a CAN-FD bus, a system for communication over a near field communication network, a system for communicating over ethernet, or a communication system configured to communicate over any of a variety of other networks. Communication systems 206 and 306 can each also include a system that facilitates downloads or transfers of information to and from a secure digital (SD) card or a universal serial bus (USB) card, or both. Communication systems 206 and 306 can each utilize networks 359. Networks 359 can be any of a wide variety of different types of networks such as the Internet, a cellular network, a wide area network (WAN), a local area network (LAN), a controller area network (CAN), a controller area network flexible data-rate (CAN-FD), a near-field communication network, ethernet, or any of a wide variety of other networks.

FIG. 2 shows that one or more operators 361 can operate grass mowing vehicles 100. The operators 361 interact with operator interface mechanisms 220. In some examples, operator interface mechanisms 220 can each include joysticks, levers, a steering wheel, linkages, pedals, buttons, wireless devices (e.g., mobile computing devices, etc.), dials, keypads, a display device (including a display screen), user actuatable elements (such as icons, buttons, etc.) on a display device, a microphone and speaker (where speech recognition and speech synthesis are provided), among a wide variety of other types of operator input control devices. Where a touch sensitive display system is provided, the operators 361 can interact with operator interface mechanisms 220 using touch gestures. Additionally, at least some of the operator interface mechanisms 220 can be used to present (e.g., display, audible presentation, haptic presentation, etc.) various information. In some examples, some operator interface mechanisms 220 (e.g., mobile devices) may be wirelessly connected to grass mowing vehicles 100, such that they can be remote from the grass mowing vehicles 100 and used by operators 361 to remotely operate grass mowing vehicles 100. Operator interface mechanisms 220 can also be utilized by operators 361 to interact, over networks 359, with other items of system 500 such as remote computing systems 300 or user interface mechanisms 364. The examples described above are provided as illustrative examples and are not intended to limit the scope of the present disclosure. Consequently, other types of operator interface mechanisms 220 can be used and are within the scope of the present disclosure.

FIG. 2 also shows remote users 366 interacting with grass mowing vehicles 100 and remote computing systems 300 through user interface mechanisms 364 over networks 359. **In** some examples, user interface mechanisms 364 can include joysticks, levers, a steering wheel, linkages, pedals, buttons, wireless devices (e.g., mobile computing devices, etc.), dials, keypads, a display device (including a display screen), user actuatable elements (such as icons, buttons, etc.) on a display device, a microphone and speaker (where speech recognition and speech synthesis are provided), among a wide variety of other types of control devices. Where a touch sensitive display system is provided, the users 366 can interact with user interface mechanisms 364 using touch gestures. Additionally, at least some of the user interface mechanisms 364 can be used to present (e.g., display, audible presentation, haptic presentation, etc.) various information. The examples described above are provided as illustrative examples and are not intended to limit the scope of the present disclosure. Consequently, other types of user interface mechanisms 364 can be used and are within the scope of the present disclosure.

Remote computing systems 300 can be a wide variety of different types of systems, or combinations thereof. For example, remote computing systems 300 can be in a remote server environment. Further, remote computing systems 300 can be remote computing systems, such as mobile devices, a remote network, a manager system, a vendor system, or a wide variety of other remote systems. In one example, grass mowing vehicles 100 can be controlled remotely by remote computing systems 300 or by remote users 366, or both. **In** some examples, operators 361 are on-board (e.g., in an operator compartment) the grass mowing vehicles 100. **In** some examples, operators 361 are remote from the grass mowing vehicles 100 and control the grass mowing vehicles through one or more interface mechanisms 220 which are remote from the grass mowing vehicles 100 but are operatively coupled (e.g., communicatively coupled, such as over networks 359) to the vehicles 100.

It will be understood that, in some examples, items in system 500 can be distributed in various ways, including ways that differ from the example shown in FIG. 2. For example, but not by limitation, path planning system 215, shown in FIG. 2 as being disposed on each grass mowing vehicle 100, can be located elsewhere, such as at one or more remote computing systems 300. In yet other examples, path planning system 215 can be distributed across both one or more grass mowing vehicles 100 and one or more remote computing systems 300. These are merely some examples of the distributions contemplated herein.

FIG. 3 is a block diagram that shows examples of some of the components of system 500 in more detail and information flow between the components.

As illustrated in FIG. 3, it can be seen that data stores 204, data stores 304, or a combination thereof, can include as data (205 and 305, respectively), sensor data 501, operation data 502, vehicle data 503, worksite data 504, and can include various other data 510, including, but not limited to, other data described elsewhere herein. **In** some examples, where the data is located can depend on where path planning system 215 (also called system 215) is located. The data can be used by path planning system 215 in generating path plans 360, as well as by other items of system 500, such as control system 205.

As shown in FIG. 3, path planning system 215 includes one or more data processing systems 330, path plan generator system 342, in-situ off path error tolerance adjustor system 344, and can include various other items 345. Path plan generator system 342 includes path generator 350, operating settings logic 352, problem area identification logic 354, off path error tolerance adjustor logic 356, and can include various other items 359. In-situ off path error tolerance adjustor system 344 includes intersection identification system 351, in-situ off path error tolerance adjustor logic 353, in-situ operating settings logic 355, and can include various other items 357. As will be described in more detail, system 215 is operable to generate one or more path plans 360 and one or more in-situ dynamic off path error tolerance adjustments 361.

Sensor data 501 includes sensor data (e.g., images, sensor signals, etc.) generated by sensors 218. Sensor data 501 can include, geographic position sensor data (indicative of geographic positions of grass mowing vehicles 100) generated by geographic position sensors 203, heading sensor data (indicative of headings of grass mowing vehicles 100) generated by heading sensors 224, speed sensor data (indicative of travels speeds of grass mowing vehicles 100) generated by speed sensors 225, perception sensor data (e.g., indicative of presence and location of non-mowing areas (e.g., obstacles, etc.), etc.) generated by perception sensors 226, as well as various other sensor data generated by other sensors 228.

Operation data 502 includes data indicative of one or more parameters of the operation being performed by the one or more vehicles 100. For example, operation data 502 can include data that indicates operation preferences such as operation priorities (e.g., prioritize time to complete, prioritize cutting coverage, etc.). The operation priorities can be used by path planning system 215 in generating a path plan. For instance, a path plan may be different depending on the operation priorities. For instance, a path plan may vary depending on whether time to complete or cutting coverage is to be prioritized. Operation data 502 can include operation design data such as cutting patterns (e.g., striping, etc.), cutting heights, as well as other operation design data. Operation data 502 can include thresholds, such as threshold values or threshold value ranges for various operating settings, such as minimum and/or maximum travel speeds, minimum and/or maximum off sets from non-mowing area, pass or swath overlaps, as well as various other operating settings. The thresholds can be used by path planning system 215 in generating a path plan. Operation data 502 can include path plans, such as path plans provide by an operator or user, historical path plans for the worksite, or provided in other ways. As will be described, in some examples, path planning system 215 (e.g., in-situ off path error tolerance adjustor system 344) is operable to inject path plans (e.g., of operation data 502, path plans 360, etc.) and generate in-situ dynamic off path error tolerance adjustments 361 based on an ingested path plan as well as various other data (e.g., sensor data 501, vehicle data 503, etc.). Operation data 502 can be derived from one or more of a variety of sources including, but not limited to, dealer or manufacturer provided information, operator or user input, as well as a variety of other sources.

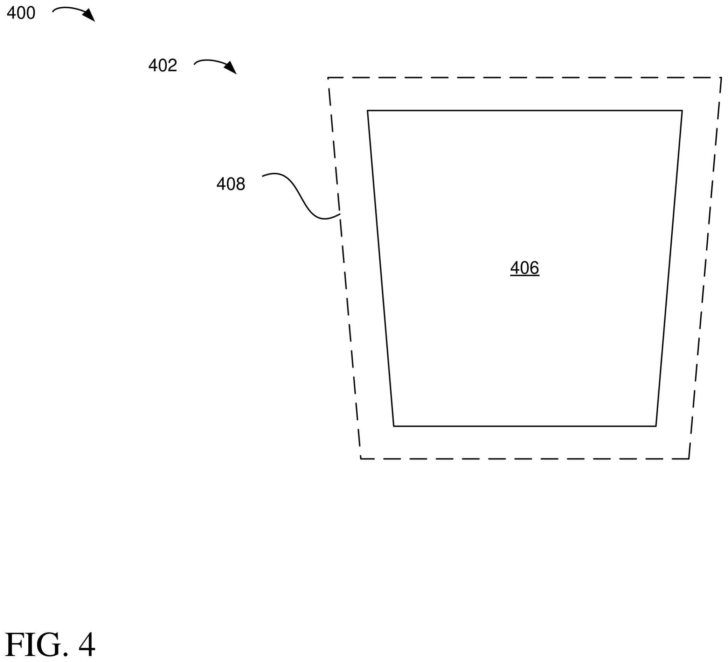

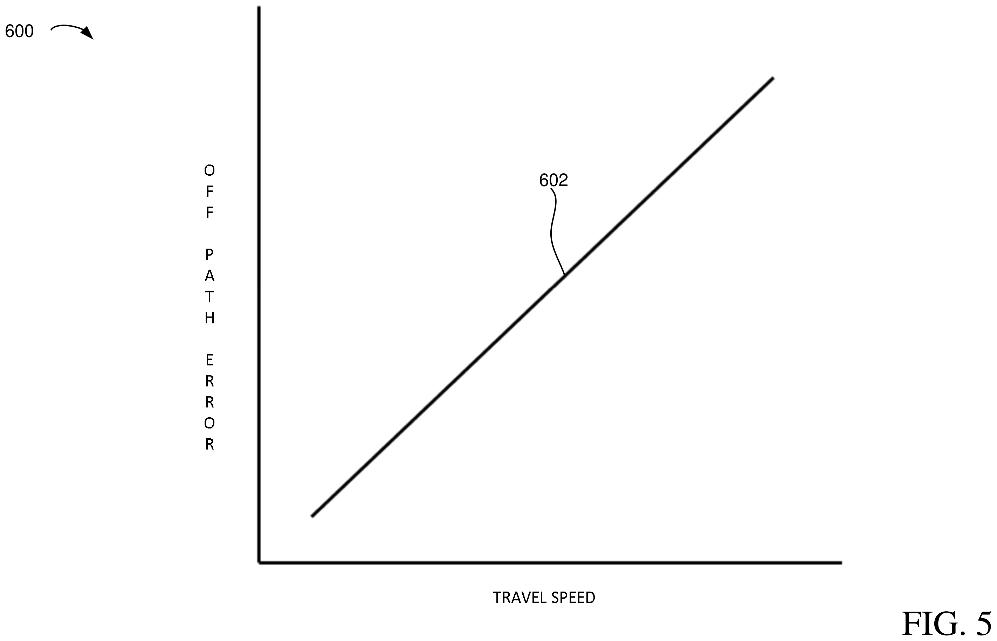

Vehicle data 503 includes data indicative of one or more characteristics of each of the one or more grass mowing vehicles 100 that are to perform (or are performing) the operation at the worksite. Vehicle data 503 can include dimensional data such as vehicle dimensions (vehicle height, vehicle width, vehicle length), vehicle cutting width (swath width), dimensions of individual components of a vehicle 100, distances between components of a vehicle 100, as well as other dimensional data. Vehicle data 503 can include vehicle ratings (vehicle capabilities), such as travel speed ratings (e.g., minimum and maximum travel speeds), turn radius, as well as various other vehicle ratings. Vehicle data 503 can include off path error tolerance data that indicates off path error values or tolerances corresponding to a vehicle 100. The off path error tolerance data can include an off path error tolerance or off path error tolerance range corresponding to a vehicle 100 or can include an off path error tolerance relationship defining a relationship between off path error tolerance and operational settings of a vehicle 100. One example of an off path error tolerance relationship is shown in FIG. 5. Vehicle data 503 can include a vehicle model. A vehicle model can include a combination of various data, such as a combination of vehicle data and operation data, as well as various other data. One example of a vehicle model is shown in FIG. 4. Vehicle data 503 can be derived from one or more of a variety of sources including, but not limited to, dealer or manufacturer provided information, operator or user input, generated by control system, as well as a variety of other sources.

Worksite data 504 includes data indicative of attributes of worksite(s) at which operation(s) (mowing operation(s)) are to be performed by vehicles 100. Worksite data 504 can include maps or other georeferenced data of the worksites. Worksite data 504 can include location and boundary information work the worksite, location and boundary information for mowing areas of the worksite, location and boundary information for non-mowing areas, identifying (e.g., typing) information for non-mowing areas, as well as various other information. Worksite data 504 can be obtained from one or more of a variety of sources including operator or user input, overhead (e.g., satellite, etc.) imagery, historical operation data (e.g., sensor data from prior operations at the worksite), third-party providers, as well as

Data processing systems process sensor data 501, operation data 502, vehicle data 503, worksite data 504, and other data 510 to generate processed data. The processed data can include computer readable values, useable (or readable) by other items of path planning system 215 or by other items of system 500. Data processing systems 330 can include various processing functionality, including image processing functionality, sensor signal processing functionality, filtering functionality, categorization functionality, normalization functionality, aggregation functionality, color extraction functionality, analog-to-digital conversion functionality, other conversion functionality (e.g., look up tables, equations, mathematical functions, models, etc.), as well as various other data processing functionalities. It will be understood then that data processing systems 330 can, for example, convert analog signals to readable digital signals (or digital values). It will be understood that data processing systems 330 can, for example, process captured images to extract values (e.g., pixel values, etc.), and can further convert the extracted values. It will be understood that data processing systems 330 can perform pre-processing and post-processing. It will be understood that data processing systems 330 can perform various forms of aggregation on the extracted or converted values. These are merely some examples of processing functionalities of data processing systems 330.

Path plan generator system 342 is operable to generate, based on one or more items of data 205/305, one or more path plans 360 useable to automatically control grass mowing vehicles 100 to operate at a worksite. By automatically it is meant that the step or function is performed without further manual involvement except, perhaps, to initiate or authorize it. A path plan 360 can include routes for a vehicle 100 to traverse a worksite. The routes can include cutting paths or passes (swaths), turns, as well as non-cutting paths. A path plan 360 can also include prescriptive operating settings (e.g., prescriptive operating settings for propulsion subsystem 212 (e.g., prescriptive travel velocity, etc.), prescriptive operating settings for steering subsystem 214 (e.g., prescriptive steering angle, etc.), prescriptive operating settings for other controllable subsystems) along the route (e.g., along the cutting paths or passes (swaths)). Control system 205 can generate control signals to control controllable subsystems 210 based on a path plan 360. Control system 205 can generate control signals to control interface mechanisms (e.g., 220 or 364, or both) based on a path plan 360, such as to present (e.g., display, etc.) the path plan or information (e.g., routes (or portions thereof) or prescriptive operating settings, or both) derived therefrom.

Path generator 350 is operable to generate routes, including cutting paths or passes (e.g., cutting swaths), non-cutting paths, and turns, based on one or more items of data 205/305. For instance, path generator 350 is operable to generate a route for a vehicle 100 to traverse and operate at the worksite to perform a mowing operation based on operations data 502, vehicle data 503, and worksite data 504. For example, path generator 350 can generate routes, including cutting paths or passes (swaths), that provide coverage of mowing areas based on location and boundary information (e.g., worksite data 504) for mowing and non-mowing areas as well as vehicle dimension and off path error data (e.g., vehicle data 503) to provide cutting coverage of mowing areas and to avoid operation in (mowing in) and/or intersection with non-mowing areas.

When initially generating a path plan, path generator 350 may use a preset or default off path error tolerance corresponding to a vehicle 100. This preset or default off path error tolerance can be provided by a user or operator or in other ways. For instance, path generator 350 may use, as the preset or default off path error tolerance, an off path error tolerance corresponding to the fastest allowable travel speed (e.g., fastest allowable mowing speed) of the vehicle 100, as it may be desirable to optimize time to complete the mowing operation. Other preset or default off path error tolerances can also be used.

Operating settings logic 352 is operable to prescribe operating settings along the routes generated by path generator 350 based on one or more items of data 205/305. Additionally, operating settings logic 352 is operable to prescribe adjusted operating settings along routes based on outputs by off path error tolerance adjustor logic 356, as will be described below.

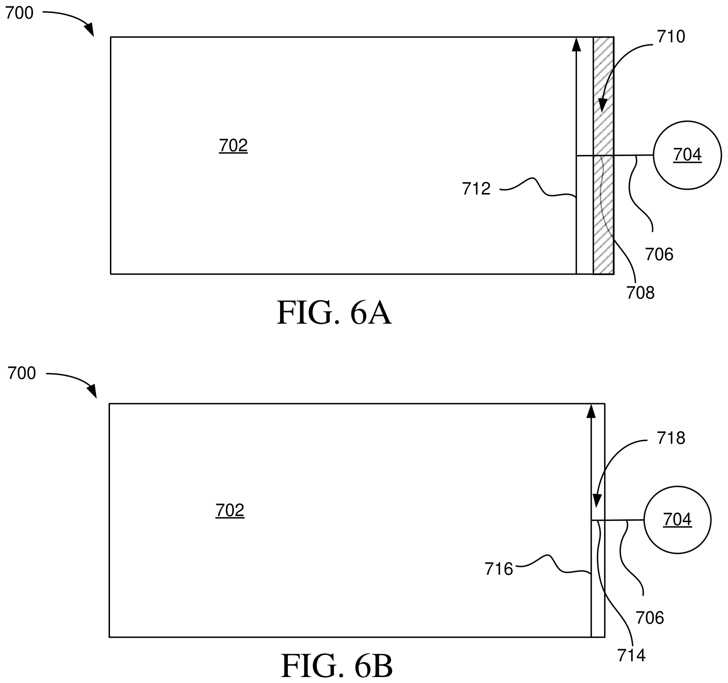

Problem area identification logic 354 is operable to identify, as problem areas, areas of the worksite for which cutting coverage cannot be provided given a current off path error tolerance (e.g., preset or default off path error tolerance) being utilized by path generator 350 based on one or more items of data 205/305. For example, based on location and boundary information for a mowing area, location and boundary information for a non-mowing area, the currently utilized off path error tolerance (e.g., preset or default off path error tolerance), and vehicle dimensions, problem area identification logic 354 can identify areas of the worksite for which cutting coverage cannot be provided. An example of this is shown in more detail in FIGS. 6A and 6B.

Off path error tolerance adjustor logic 356 is operable to dynamically adjust off path error tolerance for a vehicle 100 such that path generator 350 can generate cutting coverage (e.g., cutting paths or passes) for problem areas identified by problem area identification logic 354. Off path error tolerance adjustor logic 356 is operable to dynamically adjust off path error tolerance by identifying prescriptive operating settings (or adjusted prescriptive operating settings) that will adjust the off path error tolerance for a vehicle 100 in the problem areas, such as prescriptive travel velocity (e.g., speed) (or adjusted prescriptive travel velocity (e.g., speed)) in the problem areas. Operating settings logic 352 is operable to prescribe the prescriptive operating settings (or adjusted prescriptive operating settings) identified by off path error tolerance adjustor logic 356. Off path error tolerance adjustor logic 356 is operable to utilize one or more items of data 205/305. For instance, off path error tolerance adjustor logic 356 can identify prescriptive operating settings (or adjusted prescriptive operating settings) based on an off path error tolerance relationship of vehicle data 503 (one example of which is shown in FIG. 5). Further, off path error tolerance adjustor logic 356 is operable to identify an adjusted off path error tolerance needed to provide cutting coverage based on one or more items of data 205/305. For instance, off path error tolerance adjustor logic 356 can identify an adjusted off path error tolerance required for a given area of a worksite (e.g., problem area) based on location and boundary information for a mowing area, location and boundary information for a non-mowing area, as well as dimensional information for the vehicle 100. In some examples, off path error tolerance adjustor logic 356 can identify the minimum needed off path error tolerance to prevent intersection with or operation in the non-mowing area so that the operating setting (e.g., travel velocity (e.g., speed)) can be optimized (i.e., identify the off path error tolerance that optimizes the operating setting (e.g., allows the fastest travel velocity) while still preventing intersection with or operation in the non-mowing area). **In** other examples, off path error tolerance adjustor logic 356 can identify a plurality of suitable off path error tolerances and output the plurality of suitable off path error tolerances along with a corresponding plurality of travel velocities (e.g., speeds) and one can be selected by an operator or user. An example operation of off path error tolerance adjustor logic 356 is shown in FIGS. 6A and 6B. Thus, path plan generator system 342 is operable to output a path plan 360 providing coverage in problem areas, the path plan 360 includes routes for a vehicle to traverse the worksite, including cutting paths or passes in problem areas along with prescriptive operating settings in those problem areas that provide an adjusted off path error tolerance.

In-situ off path error tolerance adjustor system 344 is operable to generate, based on one or more items of data 205/305, one or more in-situ dynamic off path error tolerance adjustments 361 useable to automatically control grass mowing vehicles 100 during operation at a worksite. In-situ dynamic off path error tolerance adjustments 361 can include adjusted prescriptive operating settings (e.g., adjusted prescriptive travel velocity) that correspond to an adjusted off path error tolerance. The in-situ dynamic off path error tolerance adjustments 361 can include location data (indicating where along a route or at worksite the corresponding adjusted prescriptive operating settings should be instituted) and/or timing data (indicating when the corresponding adjusted prescriptive operating settings should be instituted). Control system 205 can generate control signals to control controllable subsystems 210 based on an in-situ dynamic off path error tolerance adjustment 361. Control system 205 can generate control signals to control interface mechanisms (e.g., 220 or 364, or both) based on an in-situ dynamic off path error tolerance adjustment 361, such as to present (e.g., display, etc.) the dynamic off path error tolerance adjustment or information (e.g., adjusted off path error tolerance or adjusted prescriptive operational settings, or both) derived therefrom.

Intersection identification logic 351 is operable to identify non-mowing areas at the worksite and identify upcoming intersection with or operation in the identified non-mowing areas based on one or more items of data 205/305. For example, based on a planned route of a path plan being used to control a grass mowing vehicle 100, the presence and location of a non-mowing area (e.g., as indicated by perception sensor data of sensor data 501), dimensions of the grass mowing vehicle 100, and a current off path error tolerance (or the off path error tolerance of the used path plan in the area corresponding (e.g., adjacent) to the identified non-mowing area), intersection identification logic 351 can identify that the grass mowing vehicle 100 may operate in or intersect with the non-mowing area.

In-situ off path error tolerance adjustor logic 353 is operable to dynamically adjust off path error tolerance for a vehicle 100 such that the vehicle 100 can continue to follow a utilized path plan and avoid upcoming intersection identified by intersection identification logic 351. In-situ off path error tolerance adjustor logic 353 is operable to dynamically adjust off path error tolerance by identifying prescriptive operating settings (or adjusted prescriptive operating settings) that will adjust the off path error tolerance for a vehicle 100 to avoid upcoming intersection identified by intersection identification logic 351, such as prescriptive travel velocity (e.g., speed) (or adjusted prescriptive travel velocity (e.g., speed)). In-situ operating settings logic 355 is operable to prescribe the prescriptive operating settings (or adjusted prescriptive operating settings) identified by in-situ off path error tolerance adjustor logic 353. In-situ off path error adjustor logic 353 is operable to utilize one or more items of data 205/305. For instance, in-situ off path error tolerance adjustor logic 353 can identify prescriptive operating settings (or adjusted prescriptive operating settings) based on an off path error tolerance relationship of vehicle data 503 (one example of which is shown in FIG. 5). Further, in-situ off path error tolerance adjustor logic 353 is operable to identify an adjusted off path error tolerance needed to avoid upcoming intersection. In some examples, in-situ off path error tolerance adjustor logic 353 can identify the minimum needed off path error tolerance to avoid the upcoming intersection (e.g., prevent intersection with or operation in the identified non-mowing area) so that the operating setting (e.g., travel velocity (e.g., speed)) can be optimized (i.e., identify the off path error tolerance that optimizes the operating setting (e.g., allows the fastest travel velocity) while still preventing the upcoming intersection with or operation in the non-mowing area). **In** other examples, in-situ off path error tolerance adjustor logic 353 can identify a plurality of suitable off path error tolerances and output the plurality of suitable off path error tolerances along with a corresponding plurality of travel velocities (e.g., speeds) and one can be selected by an operator or user.

In-situ operating settings logic 355 is operable to prescribe operating settings at the worksite (e.g., along a route of a path plan), based on outputs of in-situ off path error tolerance adjustor logic 353.

For example, in-situ operating settings logic 353 is operable to prescribe operating settings corresponding to an adjusted off path error tolerance identified by in-situ off path error tolerance adjustor logic 353. In-situ operating settings logic 355 can identify a location at which or a timing when the prescriptive operating setting should be instituted based on one or more items of data 205/305. For instance, based on a current heading and speed of the vehicle (e.g., as indicated by sensor data 501), a planned route (e.g., of operation data 502 or path plan 360), the location of the upcoming intersection as identified by logic 351 (or the location of the corresponding non-mowing area as identified by logic 351), and the current geographic location of the vehicle (e.g., as indicated by sensor data 501), in-situ operating settings logic 355 can identify a location at which or timing when the prescriptive operating setting should be instituted.

Thus, in-situ off path error tolerance adjustor system 344 is operable to output an in-situ dynamic off path error tolerance adjustment 361. An in-situ off path error tolerance adjustment 361 can include adjusted prescriptive operating settings (e.g., adjusted prescriptive travel velocity) that correspond to an adjusted off path error tolerance. The in-situ dynamic off path error tolerance adjustments 361 can include location data (indicating where along a route or at worksite the corresponding adjusted prescriptive operating settings should be instituted) and/or timing data (indicating when the corresponding adjusted prescriptive operating settings should be instituted). It can be seen that path planning system 215 is operable to generate one or more path plans 360 useable to automatically control grass mowing vehicles 100 to operate at a worksite. A path plan 360 can include routes for a vehicle 100 to traverse a worksite. The routes can include cutting paths or passes (swaths), turns, as well as non-cutting paths. A path plan 360 can also include prescriptive operating settings (e.g., prescriptive operating settings for propulsion subsystem 212 (e.g., prescriptive travel velocities, etc.), prescriptive operating settings for steering subsystem 214 (e.g., prescriptive steering angle, etc.), prescriptive operating settings for other controllable subsystems 216). Control system 205 can automatically generate control signals to control controllable subsystems 210 based on a path plan 360 in order to automatically control a grass mowing vehicle 100. Control system 205 can automatically generate control signals to control interface mechanisms (e.g., 220 or 364, or both) based on a path plan 360, such as to present (e.g., display, etc.) the path plan or information (e.g., routes or prescriptive operational settings, or both) derived therefrom.

It can further be seen that path planning system 215 is operable to generate one or more in-situ dynamic off path error tolerance adjustments 361 useable to automatically control grass mowing vehicles 100 during operation at a worksite. In-situ dynamic off path error tolerance adjustments 361 can include adjusted prescriptive operating settings (e.g., adjusted prescriptive travel velocity) that correspond to an adjusted off path error tolerance. The in-situ dynamic off path error tolerance adjustments 361 can include location data (indicating where along a route or at worksite the corresponding adjusted prescriptive operating settings should be instituted) and/or timing data (indicating when the corresponding adjusted prescriptive operating settings should be instituted). Control system 205 can generate control signals to control controllable subsystems 210 based on an in-situ dynamic off path error tolerance adjustment 361. Control system 205 can generate control signals to control interface mechanisms (e.g., 220 or 364, or both) based on an in-situ dynamic off path error tolerance adjustment 361, such as to present (e.g., display, etc.) the dynamic off path error tolerance adjustment or information (e.g., adjusted off path error tolerance or adjusted prescriptive operational settings, or both) derived therefrom.

FIG. 4 is a pictorial illustration showing one example of a vehicle model 400. As shown in FIG. 4, vehicle model includes a graphical representation 402 of a grass mowing vehicle 100. The graphical representation 402 illustrates the dimensions, off path error tolerance of a corresponding grass mowing vehicle 100. For example, graphical representation 402 includes a representation 406 of the actual footprint (width and length) of the vehicle 100 and representation of off path error tolerance 408 which surrounds the vehicle 100 and shows the area the vehicle may be located due to the off path error.

While not shown in FIG. 4, the model 400 can further include a data table that includes a number of configurable or selectable data inputs that can describe various data relative to the vehicle 100 such as various dimension data of the vehicle 100 (e.g., cutting width, etc.) or various operation data relative to the operation, such as desired overlap, operation priorities, as well as various other operation data. The selectable and/or input data can be obtained from a data store (e.g., 204, 304, etc.) or provided by an operator or user. As shown in FIG. 4, the table 404 includes input mechanisms (e.g., user/operator interactable up and down arrows) for a number of rows that can be used to adjust the data (or data values) in those rows.

A vehicle model, such as vehicle model 400, is useable by path planning system 215 in generating path plans 360 or in generating in-situ dynamic off path error tolerance adjustments 361, as previously discussed in FIG. 3.

FIG. 5 is a pictorial illustration showing one example of an off path error tolerance relationship 600. In the example shown in FIG. 5, off path error tolerance relationship comprises an off path error tolerance curve describing a relationship between an operational setting (illustratively travel velocity (e.g., travel speed)) and off path error tolerance. As can be seen in FIG. 5, off path error (or off path error tolerance) increases as travel velocity (e.g., speed) increases, as illustrated by off path error curve 602. In one example, off path error tolerance adjuster logic 356 is operable to identify an adjusted prescriptive operating setting (e.g., adjusted prescriptive travel velocity (e.g., speed)) by utilizing an off path error tolerance relationship (e.g., 600) to identify an operating setting (e.g., travel velocity (e.g., speed)) that corresponds to an identified off path error tolerance (e.g., an adjusted off path error tolerance identified by off path error tolerance adjustor logic 356 as needed to provide cutting coverage in a problem area). In one example, in-situ off path error tolerance adjustor logic 353 is operable to identify an adjusted prescriptive operating setting (e.g., adjusted prescriptive travel velocity (e.g., travel speed)) by utilizing an off path error tolerance relationship (e.g., 600) to identify an operating setting (e.g., travel velocity (e.g., speed)) that corresponds to an identified off path error tolerance (e.g., an adjusted off path error tolerance identified by in-situ off path error tolerance adjustor lock 353 as needed to avoid intersection with a non-mowing area). While FIG. 5 shows one example of an off path error tolerance relationship as being represented by a curve (or function), in other examples, an off path error tolerance relationship can be various other representations of an off path error tolerance relationship, such as models, equations, lookup tables, as well as various other types of representations.

FIGS. 6A and 6B are pictorial illustrations showing example path planning operations. FIGS. 6A and 6B show an example worksite 700 that includes a mowing area 702 and a non-mowing area 704. Non-mowing area is a distance 706 from the boundary of the mowing area 702.

The example shown in FIG. 6A shows an example of path planning using a fixed off path error tolerance (or a non-dynamic off path error tolerance) - herein referred to as non-dynamic path planning (or a non-dynamic path planning system). As illustrated in FIG. 6A, the non-dynamic path planning system generates a path plan that includes a route with a cutting pass 712. The cutting pass 712 is placed at distance 708 from boundary of the non-mowing area based on the dimensions of the grass mowing vehicle being used and the associated fixed off path error tolerance to ensure that the grass mowing vehicle does not intersect with (or mow in) the non-mowing area 704. As shown in FIG. 6A, this results in a lack of cutting coverage represented by uncut (unmowed) area 710. The fixed off path error tolerance in FIG. 6A prevents generation of a cutting path that brings the grass mowing vehicle closer to the non-mowing area 704.

The example shown in FIG. 6B shows an example of path planning by path planning system 215. Path planning system 215 is a dynamic path planning system capable of dynamic path planning. That is, path planning system 215 is, as previously discussed, operable to dynamically adjust the off path error tolerance corresponding to a grass mowing vehicle 100 when generating a path plan. As illustrated in FIG. 6B, path planning system 215 is operable to identify the area of the mowing area 702 adjacent to the non-mowing area as a problem area (indicated generally by arrow 718) and dynamically adjusts the off-path error of the grass mowing vehicle 100 to generate a path plan having a route with a cutting pass 716 that provides cutting coverage of the problem area. Path planning system 215 adjusts the off-path error of the grass mowing vehicle 100 by adjusting operating settings (e.g., travel velocity (e.g., speed)) of the grass mowing vehicle 100 in the problem area (e.g., along the generated cutting pass 716) such that the grass mowing vehicle 100 is able to operate more closely to the non-mowing area (as illustrated by the distance 714 between cutting pass 716 and non-mowing area 704 which is less than distance 708 shown in FIG. 6A). In the example shown in FIG. 6B, path planning system 215 prescribes a lower travel velocity (e.g., speed) (e.g., lower than the travel velocity (e.g., speed) in the example shown in FIG. 6A) in the problem area (e.g., along the generated cutting pass 716). As can be seen, the path plan generated by path planning system 215 in the example shown in FIG. 6B does not result in a lack of cutting coverage, in contrast to the example shown in FIG. 6A. It will be understood that, in some examples, even with dynamically adjustable off path error tolerance, some lack of cutting coverage may still occur, however, it will be reduced as compared to path planning with a fixed off-path error.

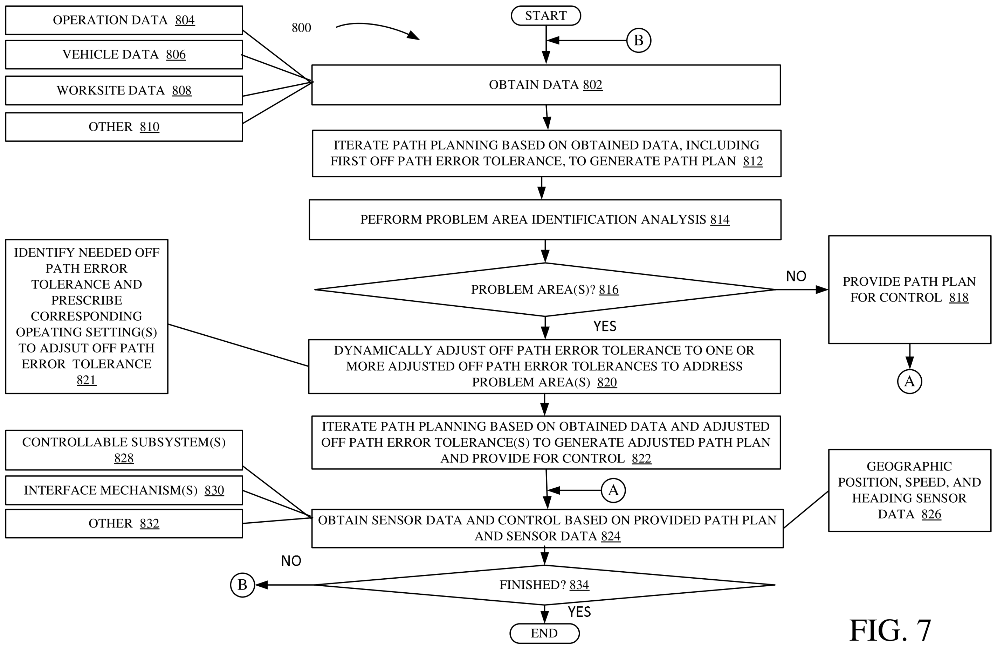

FIG. 7 is a flowchart showing one example operation 800 of system 500 in performing dynamic off path error tolerance adjustment, generating a path plan for a worksite, and performing vehicle control at the worksite based thereon.

At block 802, path planning system 215 obtains one or more items of data 205/305 for path planning. The one or more items of data can include operation data 502, as indicated by block 804.

The one or more items of data can include vehicle data 503, as indicated by block 806. The one or more items of data can include worksite data 504, as indicated by block 808. The one or more items of data can include various other data (e.g., 510, etc.), as indicated by block 810.

At block 812, path planning system 215 (e.g., path plan generator system 342) iterates path planning based on the data obtained at block 802, including a first off path error tolerance (e.g., a preset or default off path error tolerance), to generate a path plan 360 for the worksite. This path plan 360 can include routes generated by path generator 350 as well as prescriptive operating settings prescribed by operating settings logic 352.

At block 814, path planning system 215 (e.g., problem area identification logic 354), performs analysis of the path plan 360 to identify one or more problem areas, if any, based on the data obtained at block 802 as well as the path plan 360 generated at block 812.

At block 816, path planning system 215 (e.g., problem area identification logic 354), determines if there are one or more problem areas. If there are no problem areas, processing proceeds to block 818, where the path plan 360 generated at block 812 is provided for control, and processing proceeds to block 824 (discussed below). If there are one or more problem areas, processing proceeds to block 820.

At block 820, path planning system 215 (e.g., off path error tolerance adjustor logic 356) dynamically adjusts the off path error tolerance (first off path error tolerance) corresponding to the grass mowing vehicle 100 to address the problem areas based on the data obtained at block 802. As indicated by block 821, this can include path planning system 215 (e.g., off path error tolerance adjustor logic 356) identifying a needed (or a plurality of possible adjusted off path error tolerances) identifying, for each problem area, one or more adjusted off path error tolerances that can be used to provide better cutting coverage in the problem areas and identifying, for each of the one or more adjusted off path error tolerances, corresponding prescriptive operating settings (e.g., prescriptive travel velocities (e.g., speeds)). As discussed previously, path planning system 215 (e.g., off path error tolerance adjustor logic 356) may utilize an off path error tolerance relationship (e.g., 600) in adjusting the off path error tolerance.

At block 822, path planning system 215 (e.g., path plan generator system 342) iterates path planning based on the data obtained at block 802, the one or more adjusted off path error tolerances and corresponding prescriptive operating settings, to generate an adjusted path plan 360 for the worksite. This adjusted path plan 360 can include routes generated by path generator 350 as well as prescriptive operating settings prescribed by operating settings logic 352. The adjusted path plan 360 will include new cutting passes (swaths), such as new cutting passes to provide more coverage for the problem areas, as well as the prescriptive operating settings (e.g., prescriptive travel velocities (e.g., speeds)) to adjust the off path error tolerance to account for the problem areas. The adjusted path plan 360 is provided for control.

At block 824, control system 205 obtains sensor data (e.g., 501) and a provided path plan (either path plan 360 from block 812 or adjusted path plan 360 from block 822) and performs automatic control based thereon. As indicated by block 826, the obtained sensor data (e.g. 501) can include geographic position sensor data generated by geographic position sensors 203, speed sensor data generated by speed sensors 225, and heading sensor data generated by heading sensors 224,

As indicated by block 828, control system 205 can automatically control one or more controllable subsystems 210 of a grass mowing vehicle based on the obtained sensor data (e.g., 501) and the provided path plan to automatically control the grass mowing vehicle accordingly to follow the provided path plan. Additionally, or alternatively, control system 205 can automatically control one or more interface mechanisms (e.g., 220 or 364, or both) to present (e.g., display, etc.) the provided path plan or information derived therefrom, as indicated by block 830. Additionally, or alternatively, control system 205 can automatically control one or more other items of system 500, as indicated by block 832.

At block 834 it is determined if the path planning operation is complete. If the path planning operation is not complete, then processing returns to block 802. If, at block 834, the path planning operation is complete, then processing ends.

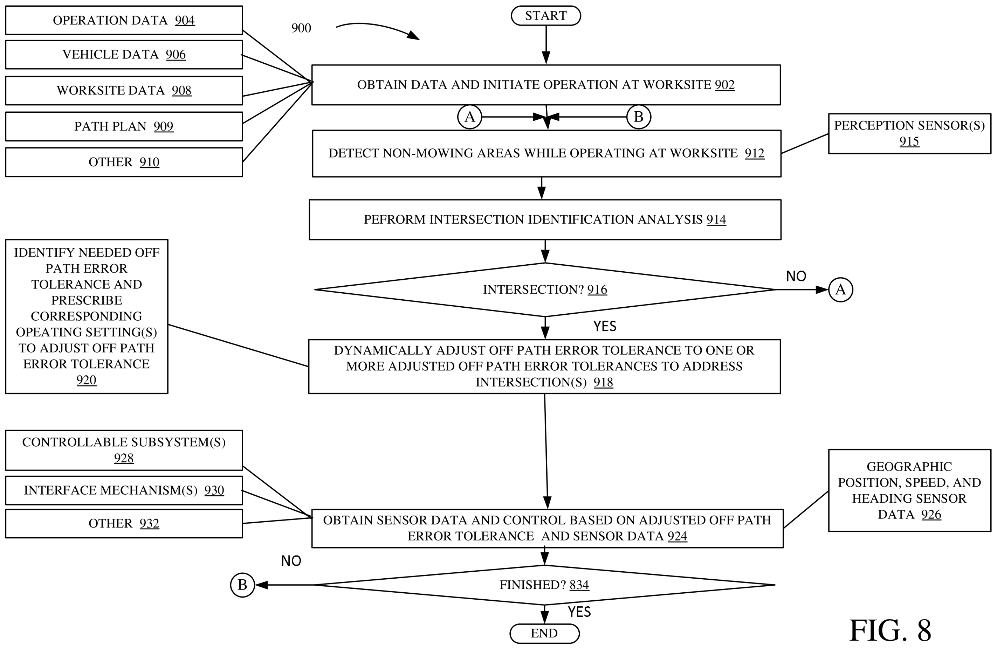

FIG. 8 is a flowchart showing one example operation 900 of system 500 in performing in-situ dynamic off path error adjustment and grass mowing vehicle control based thereon.

At block 902, path planning system 215 path planning system 215 obtains one or more items of data 205/305 and initiates operation at a worksite. The one or more items of data can include operation data 502, as indicated by block 904. The one or more items of data can include vehicle data 503, as indicated by block 906. The one or more items of data can include worksite data 504, as indicated by block 908. The one or more items of data can include a path plan, as indicated by block 909. The path plan can be a path plan 360 or another path plan, such as path plan of operation data 502. The one or more items of data can include various other data (e.g., 510, etc.), as indicated by block 910.

At block 912, presence and locations of non-mowing areas are detected by system 500. As indicated by block 915, the presence and locations of non-mowing areas can be detected by perception sensors (e.g., 226, 126, etc.).

At block 914, path planning system 215 (e.g., intersection identification logic 351), performs analysis to identify the presence and location of one or more non-mowing areas and upcoming intersections (e.g., upcoming intersections with or upcoming operation in the identified non-mowing areas), if any, based on the data obtained at block 902 as well as the detected presence and locations of non-mowing areas at block 912 (e.g., as indicated by perception sensor data). At block 916, path planning system 215 (e.g., intersection identification logic 351) determines if there are upcoming intersections. If there are no upcoming intersections, processing returns to block 912, where the system 500 will continue monitoring for non-mowing areas and upcoming intersections. If there are one or more upcoming intersections, processing proceeds to block 918. At block 918, path planning system 215 (e.g., in-situ off path error tolerance adjustor logic 353) generates one or more in-situ dynamic off path error adjustments 361 to dynamically adjusts the off path error tolerance corresponding to the grass mowing vehicle 100 to address the upcoming intersections based on the data obtained at block 902. As indicated by block 920, this can include path planning system 215 (e.g., in-situ off path error tolerance adjustor logic 353) identifying a needed (or a plurality of possible adjusted off path error tolerances) identifying, for each upcoming intersection, one or more adjusted off path error tolerances that can be used to avoid the upcoming intersections (e.g., avoid intersections with or operations in the non-mowing areas) and identifying, for each of the one or more adjusted off path error tolerances, corresponding prescriptive operating settings (e.g., prescriptive travel velocities (e.g., speeds)). As discussed previously, path planning system 215 (e.g., in-situ off path error tolerance adjustor logic 353) may utilize an off path error tolerance relationship (e.g., 600) in adjusting the off path error tolerance.

At block 924, control system 205 obtains sensor data (e.g., 501) and the in-situ dynamic off path error tolerance adjustment(s) 361 generated at block 920 and performs automatic control based thereon. As indicated by block 926, the obtained sensor data (e.g. 501) can include geographic position sensor data generated by geographic position sensors 203, speed sensor data generated by speed sensors 225, and heading sensor data generated by heading sensors 224,

As indicated by block 928, control system 205 can automatically control one or more controllable subsystems 210 of a grass mowing vehicle based on the obtained sensor data (e.g., 501) and the provided in-situ dynamic off path error tolerance adjustment(s) 361 to automatically control the grass mowing vehicle 100 bring about the off path error tolerance adjustments (e.g., institute the corresponding prescriptive operating settings), to follow the path plan, and avoid upcoming intersections. Additionally, or alternatively, control system 205 can automatically control one or more interface mechanisms (e.g., 220 or 364, or both) to present (e.g., display, etc.) the in-situ dynamic off path error tolerance adjustments 361 or information derived therefrom, as indicated by block 930. Additionally, or alternatively, control system 205 can automatically control one or more other items of system 500, as indicated by block 932.

At block 934 it is determined if the operation is complete. If the operation is not complete, then processing returns to block 912. If, at block 934, the operation is complete, then processing ends. The present discussion has mentioned processors and servers. In some examples, the processors and servers include computer processors with associated memory and timing circuitry, not separately shown. They are functional parts of the systems or devices to which they belong and are activated by and facilitate the functionality of the other components or items in those systems. Also, a number of user interface displays have been discussed. The displays can take a wide variety of different forms and can have a wide variety of different user actuatable operator interface mechanisms disposed thereon. For instance, user actuatable operator interface mechanisms can include text boxes, check boxes, icons, links, drop-down menus, search boxes, etc. The user actuatable operator interface mechanisms can also be actuated in a wide variety of different ways. For instance, they can be actuated using operator interface mechanisms such as a point and click device, such as a track ball or mouse, hardware buttons, switches, a joystick or keyboard, thumb switches or thumb pads, etc., a virtual keyboard or other virtual actuators. In addition, where the screen on which the user actuatable operator interface mechanisms are displayed is a touch sensitive screen, the user actuatable operator interface mechanisms can be actuated using touch gestures. Also, user actuatable operator interface mechanisms can be actuated using speech commands using speech recognition functionality. Speech recognition can be implemented using a speech detection device, such as a microphone, and software that functions to recognize detected speech and execute commands based on the received speech.

A number of data stores have also been discussed. It will be noted the data stores can each be broken into multiple data stores. In some examples, one or more of the data stores can be local to the systems accessing the data stores, one or more of the data stores can all be located remote form a system utilizing the data store, or one or more data stores can be local while others are remote. All of these configurations are contemplated by the present disclosure.

Also, the figures show a number of blocks with functionality ascribed to each block. It will be noted that fewer blocks can be used to illustrate that the functionality ascribed to multiple different blocks is performed by fewer components. Also, more blocks can be used illustrating that the functionality can be distributed among more components. **In** different examples, some functionality can be added, and some can be removed.

It will be noted that the above discussion has described a variety of different systems, logic, generators, and interactions. It will be appreciated that any or all of such systems, logic, generators, and interactions can be implemented by hardware items, such as one or more processors, one or more processors executing computer executable instructions stored in memory, memory, or other processing components, some of which are described below, that perform the functions associated with those systems, logic, generators, or interactions. In addition, any or all of the systems, logic, generators, and interactions can be implemented by software that is loaded into a memory and is subsequently executed by one or more processors or one or more servers or other computing component(s), as described below. Any or all of the systems, logic, generators, and interactions can also be implemented by different combinations of hardware, software, firmware, etc., some examples of which are described below. These are some examples of different structures that can be used to implement any or all of the systems, logic, generators, and interactions described above. Other structures can be used as well.

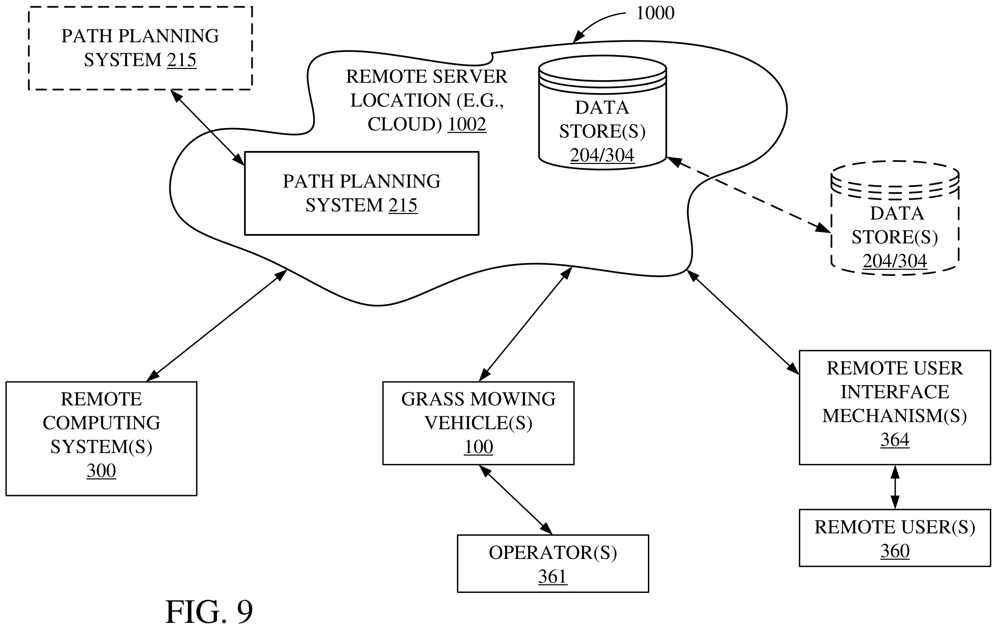

FIG. 9 is a block diagram of a remote server architecture 1000. FIG. 9, also shows one or more grass mowing vehicles 100, one or more remote computing systems 300, and one or more remote user interface mechanisms 364 in communication with the remote server environment. The grass mowing vehicles 100, remote computing systems 300, and remote user interface mechanisms 364 communicate with elements in a remote server architecture 1000. In some examples, remote server architecture 1000 provides computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network and can be accessible through a web browser or any other computing component. Software or components shown in previous figures as well as data associated therewith, can be stored on servers at a remote location. The computing resources in a remote server environment can be consolidated at a remote data center location, or the computing resources can be dispersed to a plurality of remote data centers. Remote server infrastructures can deliver services through shared data centers, even though the services appear as a single point of access for the user. Thus, the components and functions described herein can be provided from a remote server at a remote location using a remote server architecture. Alternatively, the components and functions can be provided from a server, or the components and functions can be installed on client devices directly, or in other ways.

In the example shown in FIG. 9, some items are similar to those shown in previous figures and those items are similarly numbered. FIG. 9 specifically shows that path planning system 215, data stores 204 or data stores 304, or a combination thereof, can be located at a server location 1002 that is remote from the grass mowing vehicles 100, remote computing systems 300, and remote user interface mechanisms 364. Therefore, in the example shown in FIG. 9, grass mowing vehicles 100, remote computing systems 300, and remote user interface mechanisms 364 access systems through remote server location 1002. In other examples, various other items can also be located at server location 1002, such as various other items of grass mowing system architecture 500.

FIG. 9 also depicts another example of a remote server architecture. FIG. 9 shows that some elements of previous figures can be disposed at a remote server location 1002 while others can be located elsewhere. By way of example, one or more of data store(s) 204 and 304 can be disposed at a location separate from location 1002 and accessed via the remote server at location 1002. Similarly, path planning system 215 can be disposed at a location separate from location 1002 and accessed via the remote server at location 1002. Regardless of where the elements are located, the elements can be accessed directly by grass mowing vehicles 100, remote computing systems 300, and remote user interface mechanisms 364 through a network such as a wide area network or a local area network; the elements can be hosted at a remote site by a service; or the elements can be provided as a service or accessed by a connection service that resides in a remote location. Also, data can be stored in any location, and the stored data can be accessed by, or forwarded to, operators, users, or systems. For instance, physical carriers can be used instead of, or in addition to, electromagnetic wave carriers. In some examples, where wireless telecommunication service coverage is poor or nonexistent, another machine, such as a fuel truck or other mobile machine or vehicle, can have an automated, semi-automated or manual information collection system. As a mobile machine (e.g., grass mowing vehicle 100) comes close to the machine containing the information collection system, such as a fuel truck prior to fueling, or other mobile machine or vehicle, the information collection system collects the information from the mobile machine (e.g., grass mowing vehicle 100) using any type of ad-hoc wireless connection. The collected information can then be forwarded to another network when the machine containing the received information reaches a location where wireless telecommunication service coverage or other wireless coverage is available. For instance, a fuel truck can enter an area having wireless communication coverage when traveling to a location to fuel other machines or when at a main fuel storage location. Other mobile machines or vehicles can enter an area having wireless communication coverage when traveling to other locations or when at another location. All of these architectures are contemplated herein. Further, the information can be stored on a mobile machine (e.g., grass mowing vehicle 100) until the mobile machine enters an area having wireless communication coverage. The mobile machine (e.g., grass mowing vehicle 100), itself, can send the information to another network.

It will also be noted that the elements of previous figures, or portions thereof, can be disposed on a wide variety of different devices. One or more of those devices can include an on-board computer, an electronic control unit, a display unit, a server, a desktop computer, a laptop computer, a tablet computer, or other mobile device, such as a palm top computer, a cell phone, a smart phone, a multimedia player, a personal digital assistant, etc.

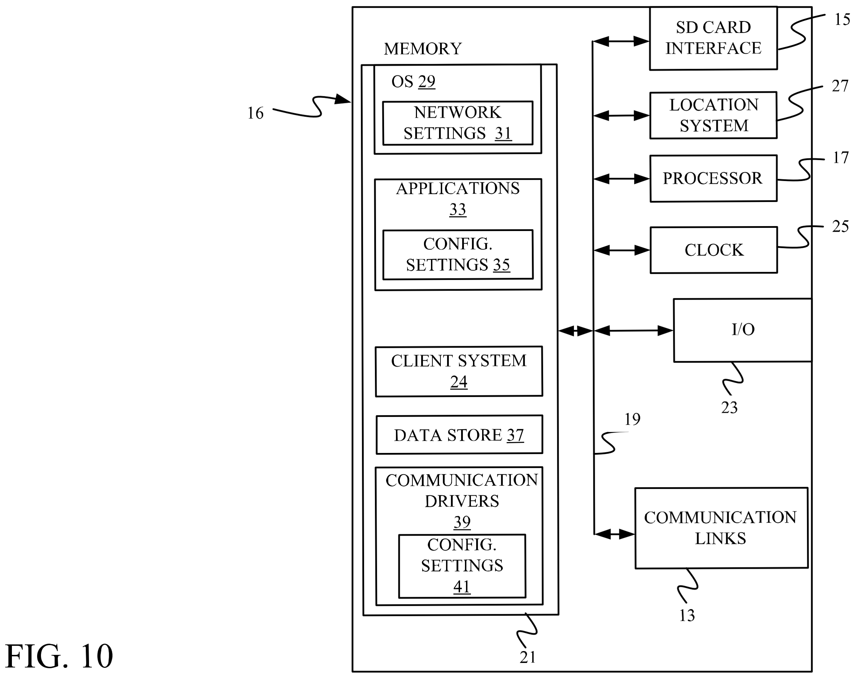

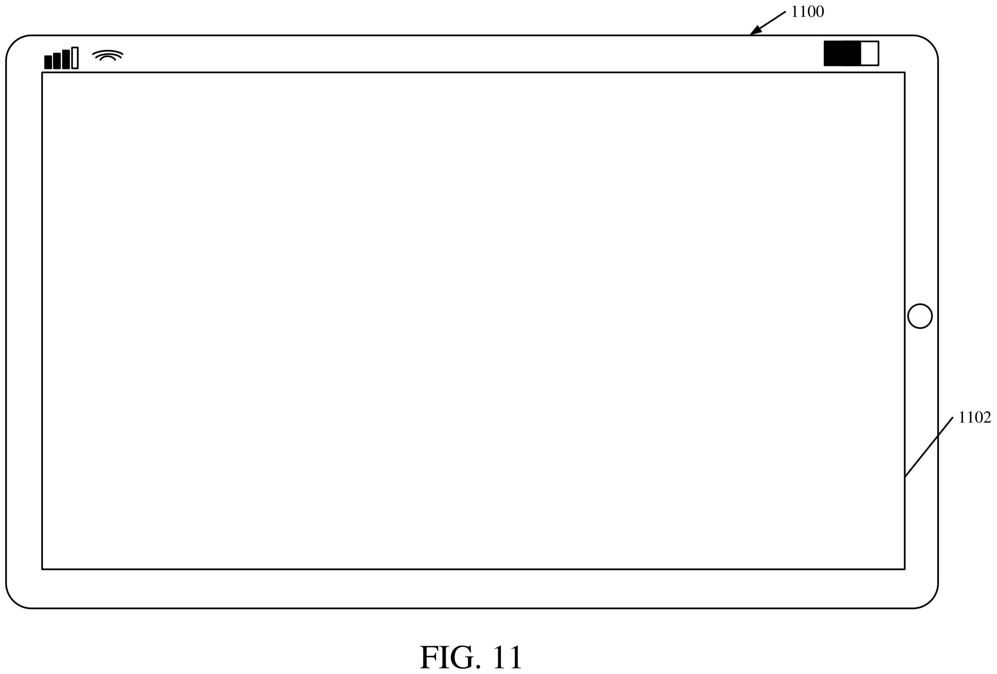

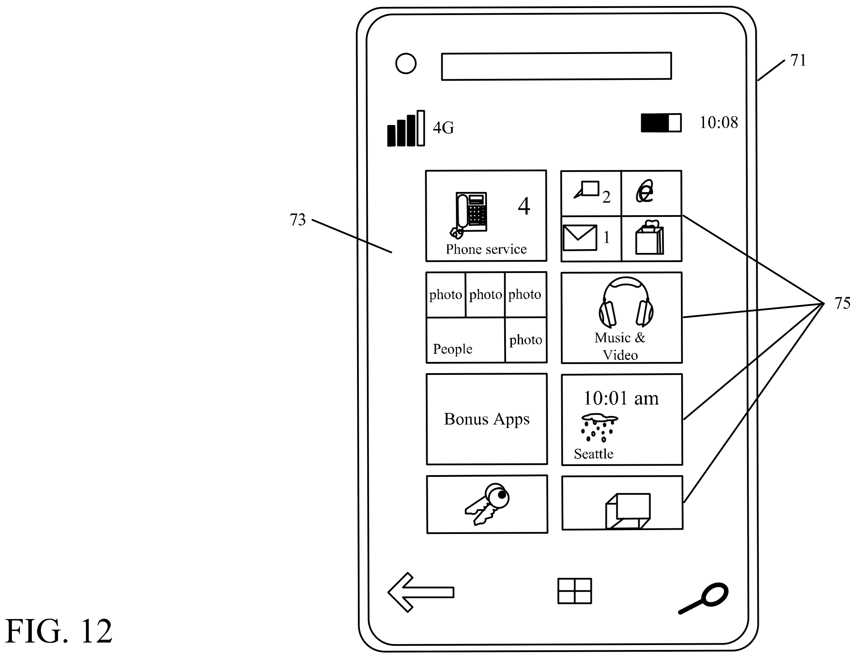

In some examples, remote server architecture 1000 can include cybersecurity measures. Without limitation, these measures can include encryption of data on storage devices, encryption of data sent between network nodes, authentication of people or processes accessing data, as well as the use of ledgers for recording metadata, data, data transfers, data accesses, and data transformations. In some examples, the ledgers can be distributed and immutable (e.g., implemented as blockchain). FIG. 10 is a simplified block diagram of one illustrative example of a handheld or mobile computing device that can be used as a user's or client's handheld device 16, in which the present system (or parts of it) can be deployed. For instance, a mobile device can be deployed on (e.g., in the operator compartment of) a mobile machine (e.g., grass mowing vehicle 100) or can be communicably coupled to a mobile machine (e.g., grass mowing vehicle) for use in generating, processing, or displaying the outputs (e.g., 360) discussed above. FIGS. 11 and 12 are examples of handheld or mobile devices.

FIG. 10 provides a general block diagram of the components of a client device 16 that can run some components shown in previous figures, that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from other figures) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a LORAN system, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, client system 24, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

FIG. 11 shows one example in which device 16 is a tablet computer 1100. In FIG. 11, computer 1100 is shown with user interface display screen 1102. Screen 1102 can be a touch screen or a pen-enabled interface that receives inputs from a pen or stylus. Tablet computer 1100 can also use an on-screen virtual keyboard. Of course, computer 1100 can also be attached to a keyboard or other user input device through a suitable attachment mechanism, such as a wireless link or USB port, for instance. Computer 1100 can also illustratively receive voice inputs as well.

FIG. 12 is similar to FIG. 11 except that the device is a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

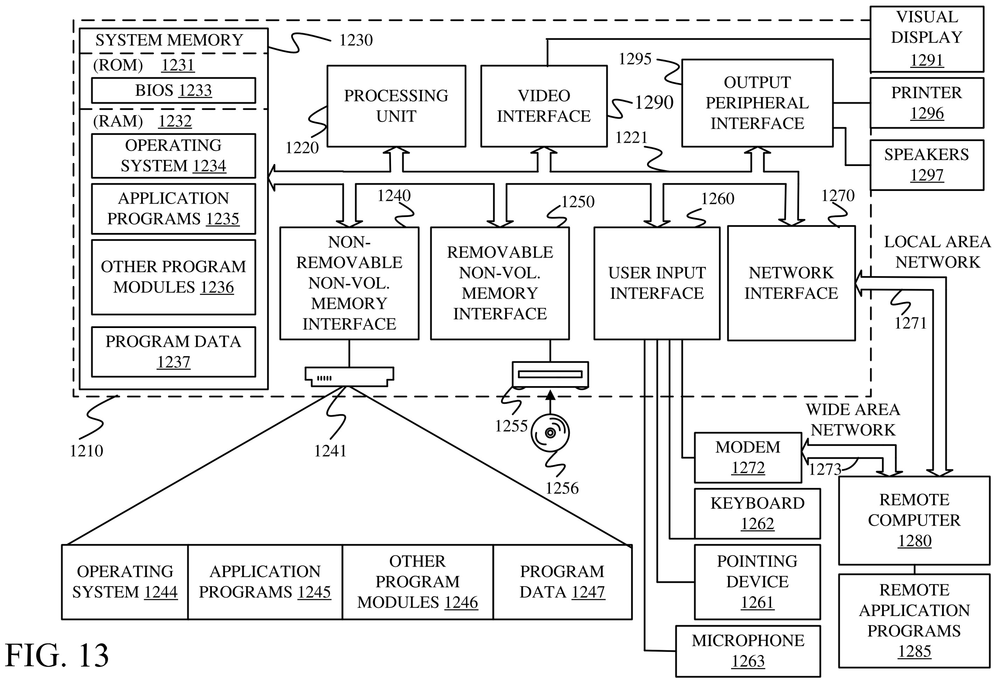

FIG. 13 is one example of a computing environment in which elements of previous figures described herein can be deployed. With reference to FIG. 13, an example system for implementing some embodiments includes a computing device in the form of a computer 1210 programmed to operate as discussed above. Components of computer 1210 can include, but are not limited to, a processing unit 1220 (which can comprise processors or servers from previous figures), a system memory 1230, and a system bus 1221 that couples various system components including the system memory to the processing unit 1220. The system bus 1221 can be any of several types of bus structures including a memory bus or memory controller, a peripheral bus, and a local bus using any of a variety of bus architectures. Memory and programs described with respect to previous figures described herein can be deployed in corresponding portions of FIG. 13.

Computer 1210 typically includes a variety of computer readable media. Computer readable media can be any available media that can be accessed by computer 1210 and includes both volatile and nonvolatile media, removable and non-removable media. By way of example, and not limitation, computer readable media can comprise computer storage media and communication media. Computer storage media is different from, and does not include, a modulated data signal or carrier wave. Computer readable media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 1210. Communication media can embody computer readable instructions, data structures, program modules or other data in a transport mechanism and includes any information delivery media. The term "modulated data signal" means a signal that has one or more of its characteristics set or changed in such a manner as to encode information in the signal. The system memory 1230 includes computer storage media in the form of volatile and/or nonvolatile memory or both such as read only memory (ROM) 1231 and random access memory (RAM) 1232. A basic input/output system 1233 (BIOS), containing the basic routines that help to transfer information between elements within computer 1210, such as during start-up, is typically stored in ROM 1231. RAM 1232 typically contains data or program modules or both that are immediately accessible to and/or presently being operated on by processing unit 1220. By way of example, and not limitation, FIG. 13 illustrates operating system 1234, application programs 1235, other program modules 1236, and program data 1237.

The computer 1210 can also include other removable/non-removable volatile/nonvolatile computer storage media. By way of example only, FIG. 13 illustrates a hard disk drive 1241 that reads from or writes to non-removable, nonvolatile magnetic media, an optical disk drive 1255, and nonvolatile optical disk 1256. The hard disk drive 1241 is typically connected to the system bus 1221 through a non-removable memory interface such as interface 1240, and optical disk drive 1255 are typically connected to the system bus 1221 by a removable memory interface, such as interface 1250.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), quantum computers, etc.

The drives and their associated computer storage media discussed above and illustrated in FIG. 13, provide storage of computer readable instructions, data structures, program modules and other data for the computer 1210. In FIG. 13, for example, hard disk drive 1241 is illustrated as storing operating system 1244, application programs 1245, other program modules 1246, and program data 1247. Note that these components can either be the same as or different from operating system 1234, application programs 1235, other program modules 1236, and program data 1237.

A user can enter commands and information into the computer 1210 through input devices such as a keyboard 1262, a microphone 1263, and a pointing device 1261, such as a mouse, trackball or touch pad. Other input devices (not shown) can include a joystick, game pad, satellite dish, scanner, or the like. These and other input devices are often connected to the processing unit 1220 through a user input interface 1260 that is coupled to the system bus, but can be connected by other interface and bus structures. A visual display 1291 or other type of display device is also connected to the system bus 1221 via an interface, such as a video interface 1290. In addition to the monitor, computers can also include other peripheral output devices such as speakers 1297 and printer 1296, which can be connected through an output peripheral interface 1295.

The computer 1210 is operated in a networked environment using logical connections (such as a controller area network - CAN, local area network - LAN, or wide area network WAN) to one or more remote computers, such as a remote computer 1280.

When used in a LAN networking environment, the computer 1210 is connected to the LAN 1271 through a network interface or adapter 1270. When used in a WAN networking environment, the computer 1210 typically includes a modem 1272 or other means for establishing communications over the WAN 1273, such as the Internet. **In** a networked environment, program modules can be stored in a remote memory storage device. FIG. 13 illustrates, for example, that remote application programs 1285 can reside on remote computer 1280.

## Claims

1. A grass mowing vehicle (100) comprising:
a plurality of ground engaging traction elements (108, 110) moveable to carry the grass mowing vehicle (100) across a worksite (700);
one or more cutting units (104, 106) configured to cut grass at the worksite (700); and
a control system (205) configured to:
adjust (820) an off path error tolerance corresponding to the grass mowing vehicle (100) to generate a path plan (360) for the grass mowing vehicle (100) at the worksite (700); and
automatically control (824) the grass mowing vehicle (100) based, at least, on the adjusted off path error tolerance.

2. The grass mowing vehicle (100) of claim 1, wherein the control system (205) is configured to adjust the off path error tolerance corresponding to the grass mowing vehicle (100) by adjusting from a first off path error tolerance to a second off path error tolerance by prescribing a value of an operating setting associated with the second off path error tolerance, and wherein the control system (205) is configured to automatically control the grass mowing vehicle (100) based on the prescribed value of the operating setting.

3. The grass mowing vehicle (100) of claim 2, wherein the control system (205) is configured to identify the prescribed value of the operating setting as being associated with the second off path error tolerance by accessing an off path error tolerance relationship defining a relationship between values of off path error tolerance and values of the operating setting.

4. The grass mowing vehicle (100) of claim 2 or 3, wherein the operating setting is travel velocity.

5. The grass mowing vehicle (100) of one of the claims 1 to 4, wherein the control system (205) is configured to:
obtain worksite data indicative of a boundary of a mowing area of the worksite (700) and indicative of a boundary of a non-mowing area of the worksite (700);
obtain vehicle data indicative of dimensions of the grass mowing vehicle (100);
identify a problem area of the worksite (700) based, at least, on the worksite data, the vehicle data, and the off path error tolerance corresponding to the grass mowing vehicle (100); and
adjust the off path error tolerance corresponding to the grass mowing vehicle (100) to generate a path plan for the grass mowing vehicle (100) at the worksite (700) based, at least, on the identified problem area, the path plan including a cutting pass providing cutting coverage for the problem area.

6. The grass mowing vehicle (100) of one of the claims 1 to 5, and further comprising one or more perception sensors configured to detect a non-mowing area of the worksite (700) and generate sensor data indicative of the non-mowing area, wherein the control system (205) is configured to:
obtain a path plan for the grass mowing vehicle (100);
identify an upcoming intersection corresponding to the non-mowing area based, at least, on the sensor data and the path plan;
adjust the off path error tolerance corresponding to the grass mowing vehicle (100) to avoid the upcoming intersection.

7. The grass mowing vehicle (100) of one of the claims 1 to 6, wherein the control system (205) is configured to automatically control the grass mowing vehicle (100) based, at least, on the adjusted off path error tolerance by automatically controlling one or more of a steering subsystem of the grass mowing vehicle (100) or a propulsion subsystem of the grass mowing vehicle (100) based, at least, on the adjusted off path error tolerance.

8. A method performed by a grass mowing vehicle (100) of one of the claims 1 to 7, the method comprising:
adjusting (820) an off path error tolerance corresponding to the grass mowing vehicle (100);
automatically controlling (824) one or more controllable subsystems of the grass mowing vehicle (100) at a worksite (700) based, at least, on the adjusted off path error tolerance.

9. The method of claim 8, wherein adjusting the off path error tolerance comprises adjusting from a first off path error tolerance to a second off path error tolerance by prescribing a value of an operating setting associated with the second off path error tolerance, and wherein automatically controlling the one or more controllable subsystems of the grass mowing vehicle (100) comprises automatically controlling the one or more controllable subsystems of the grass mowing vehicle (100) based on the prescribed operating setting.

10. The method of claim 9, wherein prescribing the operational setting associated with the second off path error tolerance comprises:
accessing an off path error tolerance relationship, the off path error tolerance relationship defining a relationship between values of off path error tolerance and values of the operational setting; and
identifying the prescribed value of the operational setting based on the off path error tolerance relationship.

11. The method of one of the claims 8 to 10, and further comprising:
obtaining worksite data indicative of a boundary of a mowing area of the worksite (700) and indicative of a boundary of a non-mowing area of the worksite (700);
obtaining vehicle data indicative of dimensions of the grass mowing vehicle (100);
identifying a problem area of the worksite (700) based, at least, on the worksite data, the vehicle data, and the off path error tolerance corresponding to the grass mowing vehicle (100); and
wherein adjusting the off path error tolerance corresponding to the grass mowing vehicle (100) comprises adjusting the off path error tolerance corresponding to the grass mowing vehicle (100) to generate a path plan for the grass mowing vehicle (100) based, at least, on the identified problem area, the path plan including a cutting pass providing cutting coverage for the problem area.

12. The method of one of the claims 8 to 11, and further comprising:
detecting, with one or more perception sensors of the grass mowing vehicle (100), a non-mowing area of the worksite (700) and generating sensor data indicative of the non-mowing area;
obtaining a path plan for the grass mowing vehicle (100);
identifying an upcoming intersection corresponding to the non-mowing area based, at least, on the sensor data and the path plan; and
wherein adjusting the off path error tolerance comprises adjusting the off path error tolerance based on the upcoming intersection to avoid the upcoming intersection.

13. The method of one of the claims 8 to 12, wherein automatically controlling one or more controllable subsystems of the grass mowing vehicle (100) based, at least, on the adjusted off path error comprises controlling one or more a steering subsystem of the grass mowing vehicle (100) or a propulsion subsystem of the grass mowing vehicle (100) based, at least, on the adjusted off path error.
